# EUROPÄISCHE PATENTSCHRIFT

(11) **EP 0 857 561 B1**
(45) Veröffentlichungstag und Bekanntmachung des Hinweises auf die Patenterteilung: **10.09.2003**
(21) Anmeldenummer: 98101766.8
(22) Anmeldetag: 02.02.1998
(51) Int. Cl.: B29C 47/88

(54) **Verfahren und Vorrichtung zur Kühlung extrudierter Hohlprofile**
Method and apparatus for cooling hollow extruded profiles
Procédé et dispositif pour le refroidissement de profilés creux extrudés

(30) Priorität: 05.02.1997 DE 19704363; 22.08.1997 DE 19736644; 30.04.1997 EP 97107226
(43) Veröffentlichungstag der Anmeldung: 12.08.1998
(73) Patentinhaber: Linde AG, 65189 Wiesbaden (DE)
(72) Erfinder: Praller, Andreas, 82515 Wolfratshausen (DE); Klane, Bernd, 81234 München (DE)
(74) Vertreter: Kasseckert, Rainer

(56) Entgegenhaltungen:
- EP-A- 0 047 378
- EP-A- 0 795 389
- DE-A- 2 324 133
- DE-A- 3 315 202
- US-A- 3 771 931
- US-A- 5 028 376
- M. LINGENHEIL & A. PRALLER: "Eiskalte Innenseite" KUNSTSTOFFE, Bd. 87, Nr. 02, Februar 1997, MUNCHEN DE, Seiten 162-164, XP002033096

## Beschreibung

Die Erfindung betrifft eine Vorrichtung und ein Verfahren gemäß den Oberbegriffen der unabhängigen Ansprüche 1 beziehungsweise 12.

Bei der Extrusion von Kunststoffrohren wird häufig nur die Außenseite der extrudierten Rohre mit Wasser gekühlt. Die Abkühlung erfolgt dabei in einer nachgeschalteten Kalibrier- und Kühlstrecke. Diese Art der Kühlung führt insbesondere bei dickwandigen Rohren zu einem nur langsamen Wärmeaustausch. Die Ausstoßleistung solcher Kunststoffextrusionsanlagen wird daher im wesentlichen durch die Abkühlgeschwindigkeit des Kunststoffes sowie der Kalibrierform begrenzt. Eine Verlängerung der Kühlstrecke zur Erhöhung der Ausstoßleistung ist sehr teuer und nur begrenzt möglich.

In der DE-OS 24 56 386 wird daher ein Verfahren vorgeschlagen, bei dem in das Innere des Kunststoffrohres im Bereich der Kalibrierform ein dort verdampfendes oder sublimierendes tiefkaltes Medium, insbesondere flüssiger Stickstoff, eingedüst wird. Ebenso ist aus der DE-OS 23 24 133 ein Verfahren zum Außenkalibrieren von extrudierten Hohlprofilen aus thermoplastischen Kunststoff bekannt, bei dem zur Kühlung ein chemisch inertes Flüssiggas mit einer kritischen Temperatur zwischen - 150 und +35°C, wie z.B. Stickstoff oder Kohlendioxid, im Hohlraum des Hohlprofils verdampft wird.

Bei der Verwendung von tiefkaltem Stickstoff zur Innenkühlung ist darauf zu achten, daß nur gasförmiger Stickstoff mit dem Kunststoffrohr in Kontakt gelangt, da flüssiger Stickstoff auf der Rohrinnenwand Beschädigungen herbeiführen kann. Bei längerem Betrieb bzw. bei hohem Stickstoffdurchsatz besteht allerdings die Gefahr, daß sich die Stickstoffzuleitungen stark abkühlen, wodurch eine restlose Verdampfung des Stickstoff nicht mehr gewährleistet ist.

In der DE-C-33 15 202 wird daher eine Vorrichtung vorgeschlagen, bei der die Austrittsdüse für den flüssigen Stickstoff von einem Verdampferglied umgeben ist, welches in Wärmekontakt mit dem heißen, extrudierten Kunststoffrohr steht. Der flüssige Stickstoff wird aus der Düse auf das Verdampferglied gesprüht, verdampft dort und wird anschließend über Austrittsöffnungen in dem Verdampferglied der inneren Oberfläche des Kunststoffrohres zugeführt.

Nach der Extrusion fließt die noch weiche Kunststoffschmelze aufgrund der Schwerkraft nach unten, so daß sich eine ungleichmäßige Wanddickenverteilung über dem Umfang des Kunststoffrohres ergibt. Diese Verformung des Rohres bzw. des Hohlprofils wird durch eine Innenkühlung wirksam verhindert. Bei der Verwendung von flüssigem Stickstoff kann im Vergleich zur Kühlung mit Wasser zudem die Extrusionsgeschwindigkeit erhöht werden.

Bei der Durchführung des flüssigen Stickstoffs durch den heißen Extruderkopf tritt ein großer Temperaturunterschied zwischen dem flüssigem Stickstoff, der eine Temperatur von -196°C besitzt, und dem Extruderkopf, der eine Temperatur von etwa 200°C besitzt, auf. Dies erfordert einen hohen Isolationsaufwand, der jedoch ein pulsierendes Austreten des Stickstoffs aus der Entspannungsdüse, welches zur Tröpfchenbildung auf dem Kunststoffrohr führt, nicht verhindern kann.

Aufgabe vorliegender Erfindung ist es daher, ein Verfahren der eingangs genannten Art aufzuzeigen, welches die Nachteile der bekannten Verfahren vermeidet. Insbesondere soll durch die Erfindung erreicht werden, daß das Kühlmedium so verteilt wird, daß ein möglichst gleichmäßiger und guter Wärmeübergang zwischen dem Kühlmedium und der Innenwand des Hohlprofils erzielt wird. Die Gefahr der Beschädigung des Hohlprofils durch tiefkaltes, flüssiges Kühlmedium soll beseitigt, die Extrusionsgeschwindigkeit erhöht, und der technische Aufwand, insbesondere der Isolieraufwand, bei der Realisierung dieses Verfahrens minimiert werden. Ebenso soll eine Vorrichtung zur Durchführung dieses Verfahrens geschaffen werden.

Diese Aufgabe wird durch eine Vorrichtung und ein Verfahren mit den Merkmalen gemäß den Ansprüchen 1 beziehungsweise 12 gelöst.

Erfindungsgemäß wird Kohlendioxid als Kühlmedium verwendet, welches in der Regel unter Druck flüssig in einem Versorgungstank gespeichert wird. Das flüssige Kohlendioxid wird durch den Extruderkopf hindurch in das Innere des extrudierten Hohlprofiles geleitet und dort in einer oder mehreren Entspannungsdüsen entspannt Bei der Entspannung des flüssigen bzw. überkritischen Kohlendioxids entsteht ein Kühlstrahl mit hoher Strömungsgeschwindigkeit, welcher aus Kohlendioxidgas und Kohlendioxidschnee besteht. Größere Kohlendioxidschnee- oder Trockeneispartikel können die Oberfläche des extrudierten Hohlprofiles schädigen. Die im Kühlstrahl enthaltenen, festen Bestandteile werden daher entweder von der Oberfläche ferngehalten oder verdampft, so daß sie mit der Oberfläche des Kunststoffhohlprofiles nicht in Kontakt kommen, oder in dem Kohlendioxidgas so fein verteilt, daß eine Beschädigung der Oberfläche des Hohlprofiles ausgeschlossen ist.

Es hat sich herausgestellt, daß Beschädigungen der Profiloberfläche erst bei Überschreiten einer, unter anderem von der Temperatur des extrudierten Profils abhängigen, kritischen Partikelgröße auftreten. Erfindungsgemäß wird das bei der Expansion entstehende feste Kohlendioxid daher so fein zerstäubt, daß die resultierenden Schneepartikel bereits bei Annäherung an die Profiloberfläche sublimieren oder daß die Partikel so klein sind, daß keine Beschädigungen der Profilwand entstehen können.

Die Innenkühlung mit Kohlendioxid anstatt flüssigem Stickstoff ist bei den bei der Kunststoffextrusion vorliegenden Bedingungen, insbesondere der hohen Temperatur des Extruderkopfes, wesentlich leichter zu handhaben, da der Isolieraufwand bei der Durchführung der Kohlendioxidzuleitung durch den Extruderkopf minimiert werden kann.

Von Vorteil wird das flüssige oder überkritische Kohlendioxid hinter dem Extrusionswerkzeug in dem Hohlprofil verteilt und dann entspannt. Vorzugsweise wird das flüssige oder überkritische Kohlendioxid auf mehrere, besonders bevorzugt auf mehrere mit dem extrudierten Hohlprofil rotationssymmetrisch angeordnete, Düsen oder eine koaxial mit dem Hohlprofil angeordnete, ringförmige Düse verteilt. Durch diese Verteilung des Kohlendioxids wird eine gleichmäßige Kühlwirkung über dem gesamten Umfang des Hohlprofils erreicht. Ungleichmäßige Wanddicken oder eine Verformung des Hohlprofils werden so vermieden.

Von Vorteil wird das entspannte Kohlendioxid, d.h. gasförmiges Kohlendioxid oder gasförmiges Kohlendioxid vermischt mit kleinen, keine Beschädigungen der Profilwand verursachenden Kohlendioxidpartikeln, nicht nur auf die Innenwand des Hohlprofils geleitet, sondern auch entlang der Innenwand des Hohlprofils geführt. Auf diese Weise wird der Wärmeübergang zwischen der Innenwand des Hohlprofils und dem Kohlendioxid intensiviert, und die Kühleigenschaften des Kohlendioxids werden weitestgehend ausgenutzt.

In einer bevorzugten Variante wird dem entspannten Kohlendioxid eine Drallströmung, d.h. eine Rotationsbewegungskomponente, aufgezwungen. Durch einen wendel- oder schraubenförmigen Strömungsverlauf wird eine noch bessere Verteilung des Kohlendioxids über dem Umfang erreicht. Ein Absinken des Kohlendioxids aufgrund der Schwerkraft und ein damit verbundenes ungleichmäßiges Abkühlen des Hohlprofils wird vermieden.

Günstig ist es auch, wenn die kinetische Energie des entspannten Kohlendioxids, welches in Kontakt mit der Innenwand kommt, im wesentlichen der kinetischen Energie des Kohlendioxids unmittelbar nach der Entspannung entspricht. Je höher die kinetische Energie des entspannten Kohlendioxids ist, d.h. je größer dessen Geschwindigkeit ist, desto intensiver ist dessen Kühlwirkung auf das frisch extrudierte Profil. Ein eventuelles Umlenken des Kohlendioxidgasstromes erfolgt daher möglichst so, daß die Strömungsgeschwindigkeit erhalten bleibt.

Bei der Innenkühlung mit tiefkalten Kühlmedien wirft die Durchführung des kalten Kühlmediums durch den heißen Extruderkopf technische Probleme hinsichtlich der Isolierung auf. Zur Vermeidung dieser Isolationsprobleme wird das flüssige Kohlendioxid bevorzugt mit Umgebungstemperatur durch den Extruderkopf geleitet. Die Anforderungen an die Isolation der Kohlendioxiddurchführung durch den Extruderkopf sind daher wesentlich geringer. Je nach den Verfahrensbedingungen, insbesondere der Temperatur des Extruderkopfes und des Kohlendioxiddurchsatzes, ist es sogar möglich, auf eine Isolierung ganz zu verzichten.

Vorzugsweise wird das extrudierte Hohlprofil innen und außen gekühlt. Die Außenkühlung erfolgt herkömmlich mit Wasser, kann jedoch auch mit Luft oder tiefkalten Gasen wie Stickstoff oder Kohlendioxid durchgeführt werden. Ist eine Wasserkühlung nicht ausreichend, so wird bevorzugt auch außen mit Kohlendioxid gekühlt. Durch eine Kombination der erfindungsgemäßen Innenkühlung mit einer Außenkühlung wird das Extrusionsverfahren sowohl in quantitativer als auch in qualitativer Hinsicht verbessert. Einerseits wird das Hohlprofil schneller abgekühlt, wodurch die Extrusionsgeschwindigkeit gesteigert werden kann, andererseits wird das Profil gleichmäßiger abgekühlt, wodurch das Auftreten von Spannungen in dem Profil verhindert wird.

Erfindungsgemäß wird das bei der Entspannung entstehende feste Kohlendioxid durch im Inneren des Hohlprofiles vorhandenes Gas in den gasförmigen Zustand überführt. Das Gas im Inneren des Hohlprofils hat nach einer bestimmten Lauflänge bereits einen Teil der Wärmeenergie des Hohlprofiles aufgenommen und besitzt daher eine deutlich höhere Temperatur als das aus der Entspannungsdüse austretende Kohlendioxid. Bringt man den bei der Entspannung entstandenen Kohlendioxidschnee in Wärmekontakt mit diesem wärmeren Gas, so sublimiert der Schnee. Das nunmehr gasförmige Kohlendioxid kann dann ebenfalls in Wärmeaustausch mit dem heißen Extrudat treten. Auf diese Weise kann auch die Kühlwirkung des Kohlendioxidschnees ausgenutzt werden. Beschädigungen der Extrudatoberfläche durch Schnee oder Eispartikel werden so ausgeschlossen.

Bei ungünstiger Anordnung der Entspannungsdüsen können in der Nähe der Entspannungsdüsen Strömungstoträume entstehen, d.h. Bereiche, in denen die Gasströmung nur sehr gering ist In diesen Bereichen können sich zum einen Schnee und Eisanhäufungen bilden, die das Hohlprofil schädigen können, zum anderen wird in diesen Bereichen eine nur ungenügende Kühlung des Hohlprofils erzielt. Erfindungsgemäß wird daher ein Teil des gasförmigen Kohlendioxids in den Bereich der Entspannungsdüsen zurückgeführt. Durch die Kreislaufführung des Gases werden Strömungstoträume, z.B. hinter den Entspannungsdüsen, und die damit einhergehenden Nachteile vermieden. Das Verhältnis zwischen dem entlang dem Extrudat strömenden Gas und der durch die Entspannungsdüsen neu zugeführten Kohlendioxidmenge wird größer, die Kühlwirkung verbessert sich.

Im Rahmen der Erfindung wird auch eine Vorrichtung der eingangs genannten Art vorgeschlagen, bei der ein Leitrohr, welches mit dem Hohlprofil einen Strömungskanal für das entspannte Kohlendioxid bildet und welches an beiden axialen Enden Öffnungen aufweist, so angeordnet ist, daß durch das aus der Entspannungsdüse austretende Kohlendioxid im Inneren des Leitrohres ein Sog in Richtung der Entspannungsdüse erzeugt wird.

Unter einer Entspannungsdüse wird in diesem Zusammenhang jede Vorrichtung verstanden, die eine Entspannung des flüssigen Kohlendioxids ermöglicht. Hierzu gehören ebenso speziell ausgebildete Düsen wie auch einfache Rohre bzw. Rohrenden.

Vorzugsweise ist gegenüber der oder den Entspannungsdüsen ein Umlenkkörper angeordnet, der bevorzugt als Kegel oder Kegelstumpf ausgebildet ist. Tritt das Kohlendioxid in axialer Richtung, d.h. in oder entgegen der Extrusionsrichtung, aus den Entspannungsdüsen aus, so wird beim Auftreffen des Kohlendioxids auf den Kegel oder den Kegelstumpf das Kohlendioxidgas in Richtung der Innenwand des Hohlprofils abgelenkt, während der Kohlendioxidschnee auf dem Kegel oder Kegelstumpf zurückgehalten wird. Durch diese Ausgestaltung wird gewährleistet, daß das extrudierte Hohlprofil nur mit gasförmigem Kohlendioxid oder sehr kleinen Schneepartikeln gekühlt wird.

Die Vorrichtung weist zweckmäßigerweise neben dem Umlenkkörper einen weiteren Umlenkring auf, der koaxial mit dem Hohlprofil angeordnet ist. Der Umlenkring ist so angeordnet, daß das aus der Entspannungsdüse ausgetretene Kohlendioxid, welches durch den Umlenkkörper auf die Innenwand gelenkt wird, entlang der Innenwand des Hohlprofils geführt wird.

Erfindungsgemäß ist in dem extrudierten Hohlprofil ein Leitrohr vorgesehen, welches mit dem Hohlprofil einen Strömungskanal für das entspannte Kohlendioxid bildet. Das Leitrohr dient dazu, einen möglichst guten Wärmeübergang zwischen dem Kohlendioxid und dem extrudierten Hohlprofil zu erzielen. Durch das Leitrohr wird eine hohe Strömungsgeschwindigkeit im Spalt zwischen Leitrohr und extrudiertem Hohlprofil erzeugt, welche einen großen Wärmeübergangskoeffizienten ermöglicht. Ferner wird durch das Leitrohr verhindert, daß das Kohlendioxid durch die Rohrmitte abströmt, ohne dem extrudierten Hohlprofil genügend Wärme zu entziehen. Die Querschnittsform des Leitrohres wird in der Regel der Querschnittsform des Hohlprofils angepaßt sein, um über den ganzen Umfang des Hohlprofils eine gleichbleibende Strömungskanalbreite zu gewährleisten. Aus fertigungstechnischen Gründen kann es aber auch günstig sein, beispielsweise bei rechteckigen Profilen runde Leitrohre einzusetzen.

Zweckmäßigerweise sind zur Expansion des flüssigen oder überkritischen Kohlendioxids mehrere mit dem extrudierten Hohlprofil rotationssymmetrisch angeordnete Düsen oder eine koaxial mit dem Hohlprofil angeordnete, ringförmige Düse vorgesehen. Diese Anordnung ermöglicht eine gleichmäßige Verteilung des Kohlendioxids über den Umfang des Hohlprofils und damit eine gleichmäßige Kühlung des Hohlprofils.

Je größer die Anzahl der Entspannungsdüsen ist, desto gleichmäßiger kann das Kohlendioxid in dem Hohlprofil verteilt werden. Aus konstruktiven Gründen ist der Einsatz von bis zu 8 Düsen zweckmäßig. Die Verwendung von mehr als 8 Düsen wird in der Regel nicht notwendig sein, ist jedoch, wenn die Kühlung sehr gleichmäßig sein muß und das Hohlprofil sehr groß ist, auch mögtich. Überraschenderweise hat sich gezeigt, daß auch bereits mit nur einer einzigen Entspannungsdüse eine gute und gleichmäßige Kühlung erzielt wird. Das Eindüsen des Kohlendioxids durch 2 bis 4 Düsen stellt einen guten Kompromiß zwischen einer möglichst gleichmäßigen Kühlung und einem nicht zu großen technischen Aufwand dar.

Zur Erzielung optimaler Wärmeübergangsbedingungen sollte die Länge des Leitrohres nicht zu kurz gewählt werden. Vorteilhaft besitzt das Leitrohr eine Länge zwischen 0,5 m und 3 m. Auf diese Weise wird die Kühlwirkung des Kohlendioxids nahezu optimal ausgenutzt. Die Bildung längerer Strömungskanäle ist nur aufwendig zur realisieren und führt zu technischen Problemen, insbesondere beim Anfahren der Extrusionsanlage.

Zur Erzeugung einer Drallströmung des entspannten Kohlendioxids ist es günstig, Leitbleche oder Injektionsrohre vorzusehen. Besonders vorteilhaft sind diese an der Außenseite des Leitrohres angeordnet. Ein oder mehrere Leitbleche oder andere Vorrichtungen, welche dem Kohlendioxid eine kreisförmige Bewegungskomponente aufzwingen, haben eine noch bessere Verteilung der Kühlströmung zur Folge.

Die Injektionsrohre zur Erzeugung einer Drallströmung werden bevorzugt unter einem Winkel von 20° bis 70°, besonders bevorzugt 30° bis 60°, zur Achse des Leitrohres angeordnet.

Die Breite des Strömungskanals zwischen dem Leitrohr und dem Hohlprofil hängt von den Verfahrensbedingungen ab und ist in Abhängigkeit von der Temperatur und der Dicke des extrudierten Hohlprofils sowie des erforderlichen Kohlendioxiddurchsatzes zu wählen. Als günstig haben sich in diesem Zusammenhang Spaltdicken zwischen 10 mm und 50 mm herausgestellt.

Die Kühlung des Hohlprofiles wird noch gleichmäßiger, wenn ein Hüllrohr vorgesehen ist, welches mit dem Leitrohr einen Strömungskanal bildet. Auf diese Weise werden in dem Strömungskanal zwischen Hüll- und Leitrohr das neu zugeführte Kohlendioxidgas und das bereits im Inneren des Hohlprofils vorhandene Gas gemischt und über den Umfang des Hohlprofils verteilt. Insbesondere wenn durch das Innere des Leitrohres Gas angesaugt und zur Entspannungsdüse zurückgeführt wird, ist diese Variante vorteilhaft.

Wird das durch die Entspannungsdüsen neu zugeführte Gas durch Injektionsrohre auf das Hohlprofil geleitet, so ist es günstig, wenn das Hüllrohr in Extrusionsrichtung über das Ende der Injektionsrohre hinausragt. Wenn nur wenige, insbesondere wenn nur eine Entspannungsdüse verwendet werden, wird der Teil des Hohlprofils, der in der Nähe des Austrittsbereichs des Injektionsrohres liegt, stärker gekühlt als das restliche Profil. Durch die erfindungsgemäße Verlängerung des Hüllrohres über das Ende der Injektionsrohre hinaus wird eine Mischung des neu zugeführten und des bereits vorhandenen Kohlendioxidgases sowie eine bessere Verteilung des Gases erreicht.

Durch die Erfindung werden wesentliche Vorteile gegenüber dem Stand der Technik erzielt. Durch die vorgeschlagene Kühlung mit Kohlendioxid werden die Wanddickenverteilung, die Rundheit bzw. allgemein die Geometrie des extrudierten Hohlprofils verbessert. Es wird eine sehr effiziente Kühlung erreicht, die eine Erhöhung der Extrusionsgeschwindigkeit und damit der Ausschußmenge einer Extrusionslinie ermöglicht. Die Abkühlung des Hohlprofils erfolgt sehr gleichmäßig wodurch, insbesondere wenn von innen und außen gekühlt wird, geringere Spannungen in dem Hohlprofil auftreten. Im Vergleich zu den herkömmlichen Kühlverfahren mit flüssigem Stickstoff bereitet die erfindungsgemäße Kühlung keinerlei Probleme bei der Isolation der Kühlmediumdurchführung durch den Extruderkopf. Die Erfindung eignet sich für die Kühlung aller extrudierbaren Kunststoffe, bspw. PVC, PE oder PP. Besonders günstig ist der Einsatz der Erfindung bei der Extrusion von Kunststoffprofilen oder Kunststoffrohren mit großen Abmessungen und großen Wandstärken.

Die Erfindung sowie weitere Einzelheiten der Erfindung werden im folgenden anhand von in den schematischen Zeichnungen dargestellten Ausführungsbeispielen näher erläutert.

Es zeigen im einzelnen
- Figur 1: das Grundprinzip der erfindungsgemäßen Innenkühlung mit Kohlendioxid,
- Figur 2: eine detailliertere Darstellung der erfindungsgemäßen Kühlvorrichtung,
- Figur 3: eine alternative Ausgestaltungsform der Kühlvorrichtung,
- Figur 4: eine weitere Ausführungsform der Erfindung und
- Figur 5: einen Schnitt durch die Figur 4.

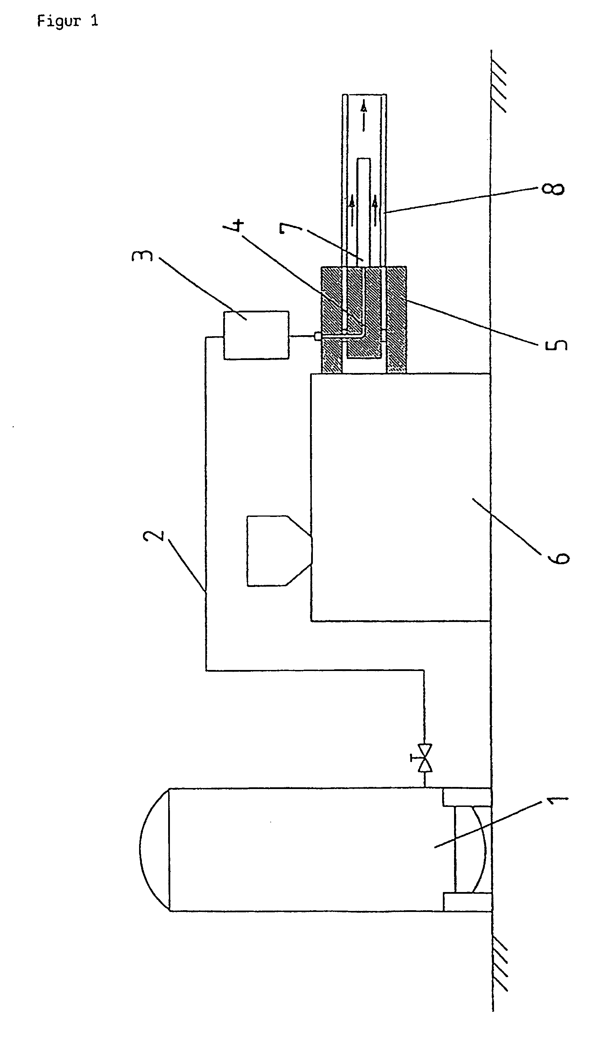

In Figur 1 ist schematisch das Grundprinzip der Innenkühlung von extrudierten Rohren gezeigt. Als Kühlmedium wird Kohlendioxid verwendet, das unter Druck flüssig in einem Versorgungstank 1 gespeichert wird. Über eine Zuleitung 2 und eine Dosiertafel 3 wird das flüssige Kohlendioxid zum Extruderkopf 5 geleitet. Das Kohlendioxid, welches Umgebungstemperatur von etwa 20°C besitzt, wird mittels eines Edelstahlrohres 4 durch den Extruderkopf 5 der Kühlvorrichtung 7 zugeführt.

Mittels dieser Kühlvorrichtung 7 wird ein von dem Extruder 6 durch den Extruderkopf 5 extrudiertes Kunststoffrohr 8 von innen gekühlt.

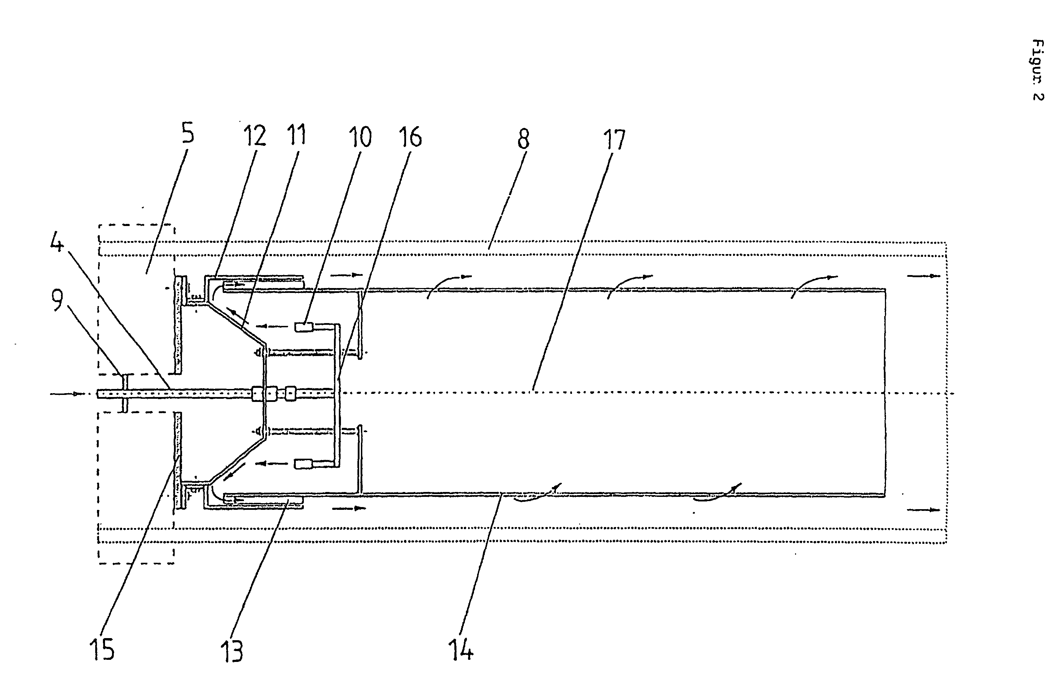

In Figur 2 ist die Kühlvorrichtung 7 im Detail dargestellt. Das Edelstahlrohr 4 ist durch Abstandsringe 9 gegen den Extruderkopf 5 isoliert. Dieser Abstandsringe 9 bestehen aus einem temperaturbeständigen Isoliermaterial, z.B. Teflon, und verhindern einen direkten Kontakt des Kohlendioxids mit dem Extruderkopf 5 und damit eine zu starke Abkühlung des Extruderkopfes 5. Das Edelstahlrohr 4 endet in einem Verteilerstück 16, welches mehrere rotationssymmetrisch um die Achse 17 angeordnete Entspannungsdüsen 10 aufweist. Im Verteilerstück 16 wird das flüssige Kohlendioxid gleichmäßig auf die Entspannungsdüsen 10 verteilt, um eine gute Umfangsverteilung des Kohlendioxids zu erzielen. In den Entspannungsdüsen 10 expandiert das flüssige bzw. überkritische Kohlendioxid, wobei ein Kühlstrahl mit hoher Strömungsgeschwindigkeit entsteht. Der Kühlstrahl besteht aus einem Gemisch von Kohlendioxidschnee und Kohlendioxidgas.

Die Entspannungsdüsen 10 sind mit ihren Austrittsöffnungen entgegen der Extrusionsrichtung angeordnet, so daß bei der Entspannung des flüssigen oder überkritischen Kohlendioxids warmes Kohlendioxidgas von der dem Extruderkopf 5 abgewandten Seite angesaugt wird. Dies hat den Vorteil, daß bei der Entspannung aufgrund der Vermischung mit dem angesaugten, warmen Gas hauptsächlich Kohlendioxid im gasförmigen Zustand und nur zu einem sehr kleinen Teil Kohlendioxid im festen Zustand entsteht.

Damit die dennoch in geringem Umfang in dem Kühlmittelstrahl enthaltenen Trockeneispartikel und Kohlendioxidschneepartikel nicht direkt mit der Rohroberfläche 8 in Berührung kommen, wird der Kühlmittelstrahl der einzelnen Entspannungsdüsen 10 umgelenkt. Hierzu sind die Entspannungsdüsen 10 auf einen Kegelstumpf 11 gerichtet, auf den der Kühlstrahl jeder Entspannungsdüse 10 auftrifft. Der austretende Kohlendioxidschnee sammelt sich auf der Oberfläche des Kegelstumpfes 11, von welchem er vom Kohlendioxidgas fein verteilt mitgerissen wird und/oder sublimiert.

Der Kegelstumpf 11 ist unter Zwischenschaltung einer Isolierplatte 15 an dem Extruderkopf 5 befestigt, so daß der Kegelstumpf 11 und der Extruderkopf 5 thermisch getrennt sind, um eine zu starke Abkühlung des Extruderkopfes 5 zu vermeiden. Der Kühlstrom aus Kohlendioxidgas wird durch einen Umlenkring 12 so abgelenkt, daß er entlang der Innenwand des extrudierten Rohres 8 strömt

Das Strömungsleitrohr 14, welches eine Länge von 2m besitzt, dient dazu, einen möglichst guten Kontakt zwischen dem Kohlendioxid und der Innenwand des extrudierten Rohres 8 zu erreichen. Durch das Leitrohr 14 wird eine hohe Strömungsgeschwindigkeit im Spalt zwischen dem Leitrohr 14 und dem extrudierten Rohr 8 erzeugt, die einen großen Wärmeübergangskoeffizienten ermöglicht. Das Leitrohr 14 weist an seinem dem Extruderkopf 5 zugewandten Ende Leitbleche 13 auf, die eine Drallströmung des Kohlendioxids erzeugen. Die Drallströmung verhindert ein Absinken des Kohlendioxids aufgrund der Schwerkraft nach unten und gewährleistet eine gleichmäßige Verteilung des Kohlendioxids in dem Rohr 8.

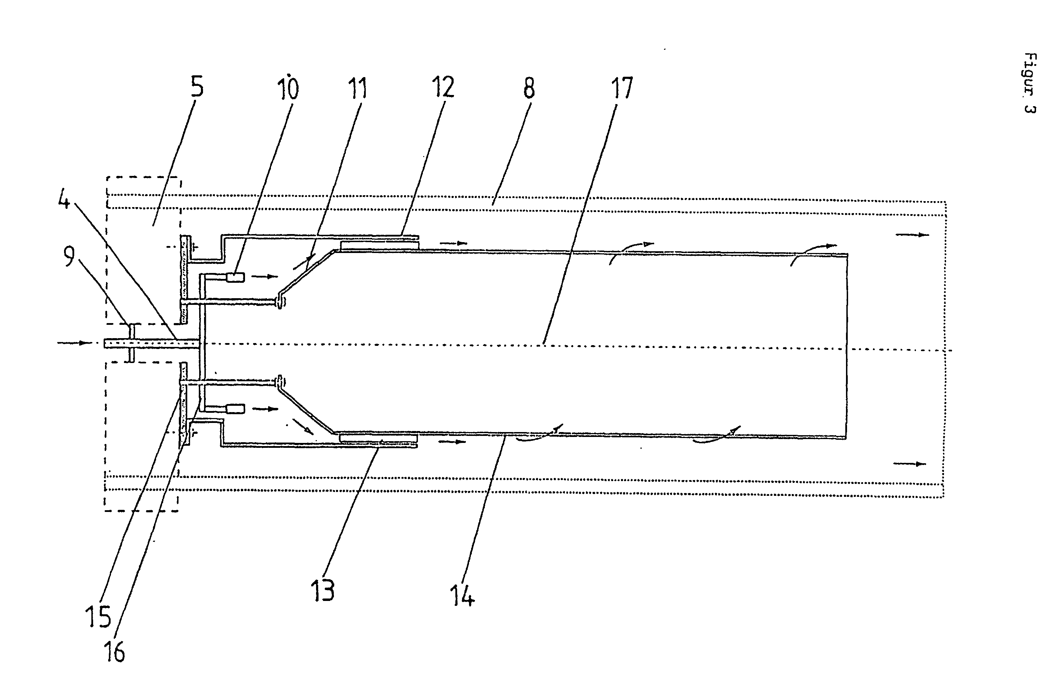

In Figur 3 ist beispielhaft eine weitere Ausführungsform der Kühlvorrichtung 7 dargestellt. Die Zuleitung 4 für das flüssige Kohlendioxid endet wiederum in einem Verteilerstück 16, welches eine Vielzahl von rotationssymmetrisch um die Achse 17 angeordneten Entspannungsdüsen 10 aufweist. Anstelle der Entspannungsdüsen 10 ist es auch von Vorteil, eine axialsymmetrisch mit der Achse 17 angeordnete Ringdüse zu verwenden.

Die in Figur 3 dargestellte Kühlvorrichtung unterscheidet sich von der in Figur 2 gezeigten Kühlvorrichtung im wesentlichen dadurch, daß die Austrittsrichtung des Kohlendioxids aus den Entspannungsdüsen in Extrusionsrichtung des Rohres 8 verläuft, und nicht entgegen der Extrusionsrichtung. Die übrigen mit Bezugszeichen versehenen Bestandteile der in Figur 3 dargestellten Kühlvorrichtung entsprechen den in Figur 2 gezeigten Teilen.

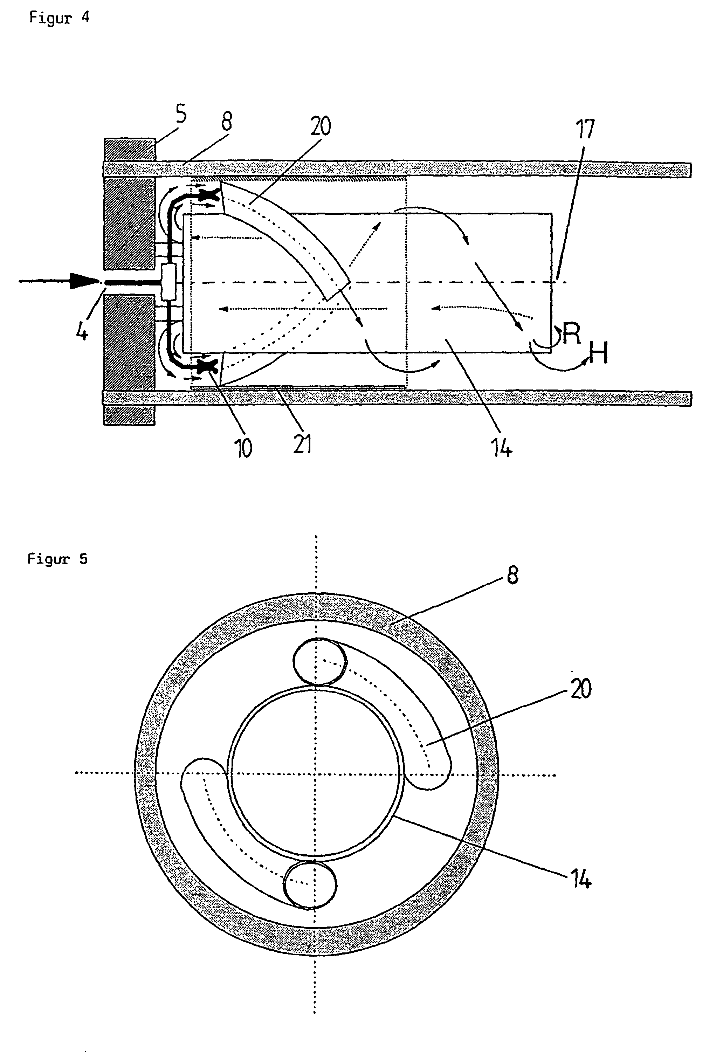

Figur 4 zeigt eine weitere Ausführungsform der Erfindung. Das flüssige oder überkritische Kohlendioxid expandiert in den Entspannungsdüsen 10 und reißt dabei Gas aus der Umgebung der Düsen 10 mit. Gegenüber den beiden Entspannungsdüsen 10 befindet sich jeweils ein Injektionsrohr 20, in das das aus den Düsen 10 austretende Gas-Schnee-Gemisch und das mitgerissene Gas strömen. Das aus der Umgebung mitgerissene Gas mischt sich mit dem expandierten Kohlendioxid und bewirkt die Sublimation des festen Kohlendioxids in dem Gas-Schnee-Gemisch. Am Ende der Injektionsrohre 20 tritt so ein gasförmiger Kohlendioxidstrahl hoher Geschwindigkeit aus.

Die Injektionsrohre 20 sind tangential zum Leitrohr, wie in Figur 5 zu sehen, unter einem Winkel von 45° zur Mittelachse 17 des Leitrohres angeordnet. Dem aus den Rohren 20 austretende Kohlendioxidgas wird infolge der Krümmung der Rohre 20 eine Drallströmung aufgezwungen, die bis über das Ende des Leitrohres 14 hinaus erhalten bleibt. Koaxial mit dem Leitrohr 14 ist ein Hüllrohr 21 vorgesehen, welches mit dem Leitrohr 14 einen ringförmigen Strömungskanal bildet. Das Ende des Hüllrohres 21 ragt in axialer Richtung über das Ende der Injektionsrohre 20 hinaus, so daß das aus den Rohren 20 austretende Gas nicht unmittelbar auf die Innenwand des Hohlprofils 8 trifft, sondern zuerst in dem Spalt zwischen Hüllrohr 21 und Leitrohr 14 strömt. Dabei verteilt sich das aus den Rohren 20 austretende Gas über den Umfang des Leitrohres 14 und mischt sich mit dem bereits vorhandenen Gas. Auf diese Weise wird nach dem Austritt des Kohlendioxidgases aus dem Hüllrohr 21 über den gesamten Umfang des Hohlprofiles 8 eine gleichmäßige Kühlwirkung erzielt.

Das Leitrohr 14 ist an beiden Stirnflächen offen. Der Hauptteil H des in dem Spalt zwischen Leitrohr 14 und Hohlprofil 8 strömenden Gases strömt auch nach Erreichen des Endes des Leitrohres 14 entlang des Hohlprofils 8 weiter. Ein Teil R des Gases wird dagegen von der Düsenströmung 10 angesaugt und strömt durch das Innere des Leitrohres 14 zu den Düsen 10 zurück. Die Gasströmung ist in der Figur 4 durch Pfeile veranschaulicht. Durch die Ausbildung dieser Rückströmung werden Strömungstoträume mit eventuellen Schneeanhäufungen im Bereich des Extruderkopfes 5 vermieden.

Außer den gezeigten Ausführungsformen der Kühlvarrichtung sind noch zahlreiche weitere Varianten möglich. Beispielsweise kann es vorteilhaft sein, die Entspannungsdüsen und/oder den Umlenkkörper und/oder den Umlenkring so anzuordnen, daß das Kohlendioxid entgegen der Extrusionsrichtung entlang der Innenwand des Hohlprofiles strömt, wodurch eine schwächere Kühlung erzielt wird. Dies kann bei Hohlprofilen, bei denen bei sehr schneller Abkühlung Spannungen auftreten, günstig sein. Besteht diese Gefahr nicht, so ist es andererseits vorteilhaft, mehrere der erfindungsgemäßen Kühlvorrichtungen in Extrusionsrichtung hintereinander anzuordnen. Das in das Innere des Hohlprofiles geleitete Kohlendioxid wird also auf eine Vielzahl axial, radial und/oder azimutal angeordneter Entspannungsdüsen verteilt.

## Patentansprüche

1. Vorrichtung zur Kühlung von extrudierten Hohlprofilen (8), insbesondere Rohren, aus Kunststoff mit mindestens einer Zuleitung (4) für flüssiges oder überkritisches Kohlendioxid, welche durch einen Extruderkopf (5) in das Innere des Hohlprofils (8) verläuft, und welche mindestens eine Entspannungsdüse (10) aufweist, **dadurch gekennzeichnet, dass** ein Leitrohr (14), welches mit dem Hohlprofil (8) einen Strömungskanal für das entspannte Kohlendioxid bildet und welches an beiden axialen Enden Öffnungen aufweist, so angeordnet ist, dass durch das aus der Entspannungsdüse (10) austretende Kohlendioxid im Inneren des Leitrohres (14) ein Sog in Richtung der Entspannungsdüse (10) erzeugt wird.

2. Vorrichtung nach Anspruch 1, **dadurch gekennzeichnet, dass** mehrere mit dem extrudierten Hohlprofil (8) rotationssymmetrisch angeordnete Düsen (10) oder eine koaxial mit dem Hohlprofil (8) angeordnete, ringförmige Düse vorgesehen sind.

3. Vorrichtung nach einem der Ansprüche 1 oder 2, **dadurch gekennzeichnet, dass** das Leitrohr (14) zwischen 0,5 m und 3 m lang ist.

4. Vorrichtung nach einem der Ansprüche 1 bis 3, **dadurch gekennzeichnet, dass** die Austrittsöffnung der Entspannungsdüse (10) entgegen der Extrusionsrichtung gerichtet ist.

5. Vorrichtung nach einem der Ansprüche 1 bis 4, **dadurch gekennzeichnet, dass** ein oder mehrere Leitbleche (13) oder Injektionsrohre (20) vorgesehen sind, die eine Drallströmung des entspannten Kohlendioxids bewirken.

6. Vorrichtung nach Anspruch 5, **dadurch gekennzeichnet, dass** der Winkel zwischen dem Injektionsrohr (20) und der Achse (17) des Leitrohres (14) 20° bis 70° beträgt.

7. Vorrichtung nach einem der Ansprüche 1 bis 6, **dadurch gekennzeichnet, dass** 1 bis 8, vorzugsweise 2 bis 4, Entspannungsdüsen (10) vorgesehen sind.

8. Vorrichtung nach einem der Ansprüche 1 bis 7, **dadurch gekennzeichnet, dass** ein Hüllrohr (21) vorgesehen ist, welches mit dem Leitrohr (14) einen Strömungskanal bildet.

9. Vorrichtung nach einem der Ansprüche 1 bis 8, **dadurch gekennzeichnet, dass** sich gegenüber der Entspannungsdüse (10) mindestens ein Umlenkkörper (11) befindet, der ein Umlenken des bei der Entspannung des flüssigen oder überkritischen Kohlendioxids entstehenden Kohlendioxids in Richtung oder entlang der Innenwand des Hohlprofils (8) bewirkt.

10. Vorrichtung nach Anspruch 9, **dadurch gekennzeichnet, dass** der Umlenkkörper (11) als Kegel oder Kegelstumpf ausgebildet ist.

11. Vorrichtung nach einem der Ansprüche 9 oder 10, **dadurch gekennzeichnet, dass** ein koaxial mit dem Hohlprofil (8) angeordneter Umlenkring (12) vorgesehen ist, der in Kombination mit dem Umlenkkörper (11) ein Umlenken des aus der Entspannungsdüse (10) austretenden Kohlendioxids entlang der Innenwand des Hohlprofils (8) bewirkt.

12. Verfahren zur Kühlung von extrudierten Hohlprofilen (8), insbesondere Rohren, aus Kunststoff, bei dem flüssiges oder überkritisches Kohlendioxid durch einen Extruderkopf (5) über mindestens eine Zuleitung (4) und mindestens eine Entspannungsdüse (10) in das Innere des Hohlprofils geleitet und entspannt wird, wobei gasförmiges und festes Kohlendioxid entsteht, und das Innere des Kunststoffhohlprofils (8) mit dem entspannten Kohlendioxid gekühlt wird, **dadurch gekennzeichnet, dass** das entspannte Kohlendioxid durch einen Strömungskanal geleitet wird, der durch ein im Inneren des Hohlprofils befindliches, an beiden axialen Enden Öffnungen aufweisendes Leitrohr und das Hohlprofil gebildet wird, wobei das Leitrohr so angeordnet ist, dass durch das aus der Entspannungsdüse (10) austretende Kohlendioxid im Inneren des Leitrohres ein Sog in Richtung der Entspannungsdüse erzeugt wird und das bei der Entspannung des flüssigen oder überkritischen Kohlendioxids entstehende, feste Kohlendioxid durch sich im Inneren des Hohlprofils (8) befindliches Gas in den gasförmigen Zustand übergeführt wird.

13. Verfahren nach Anspruch 12, **dadurch gekennzeichnet, dass** das durch den Extruderkopf (5) geleitete, flüssige oder überkritische Kohlendioxid in dem extrudierten Hohlprofil (8) verteilt und anschließend entspannt wird.

14. Verfahren nach Anspruch 13, **dadurch gekennzeichnet, dass** das flüssige oder überkritische Kohlendioxid auf mehrere mit dem extrudierten Hohlprofil (8) rotationssymmetrisch angeordnete Düsen (10) oder eine koaxial mit dem Hohlprofil (8) angeordnete, ringförmige Düse verteilt wird.

15. Verfahren nach einem der Ansprüche 12 bis 14, **dadurch gekennzeichnet, dass** das entspannte Kohlendioxid auf einen Umlenkkörper (11) geleitet wird.

16. Verfahren nach einem der Ansprüche 12 bis 15, **dadurch gekennzeichnet, dass** dem entspannten Kohlendioxid eine Drallströmung aufgezwungen wird.

17. Verfahren nach einem der Ansprüche 12 bis 16, **dadurch gekennzeichnet, dass** die kinetische Energie des mit der Innenwand des Hohlprofils (8) in Wärmekontakt gebrachten Kohlendioxids im wesentlichen der kinetischen Energie des Kohlendioxids unmittelbar nach der Entspannung entspricht

18. Verfahren nach einem der Ansprüche 12 bis 17, **dadurch gekennzeichnet, dass** flüssiges Kohlendioxid mit Umgebungstemperatur durch den Extruderkopf (5) geleitet wird.

19. Verfahren nach einem der Ansprüche 12 bis 18, **dadurch gekennzeichnet, dass** das Hohlprofil (8) innen und außen gekühlt wird.

## Claims

1. Apparatus for cooling extruded hollow sections (8), in particular tubes, made from plastic, having at least one feed line (4) for liquid or supercritical carbon dioxide which runs through an extruder head (5) into the interior of the hollow section (8), and which has at least one expansion nozzle (10), **characterized in that** a guide tube (14), which together with the hollow section (8) forms a flow passage for the expanded carbon dioxide and which has openings at both axial ends, is arranged in such a way that the carbon dioxide which emerges from the expansion nozzle (10) generates a suction in the direction of the expansion nozzle (10) in the interior of the guide tube (14).

2. Apparatus according to Claim 1, **characterized in that** a plurality of nozzles (10) arranged rotationally symmetrically with respect to the extruded hollow section (8) or one annular nozzle arranged coaxially with respect to the hollow section (8) is/are provided.

3. Apparatus according to one of Claims 1 or 2, **characterized in that** the guide tube (14) is between 0.5 m and 3 m long.

4. Apparatus according to one of Claims 1 to 3, **characterized in that** the outlet opening of the expansion nozzle (10) is directed in the opposite direction to the direction of extrusion.

5. Apparatus according to one of Claims 1 to 4, **characterized in that** one or more guide plates (13) or injection tubes (20) are provided, so as to swirl up the flow of the expanded carbon dioxide.

6. Apparatus according to Claim 5, **characterized in that** the angle between the injection tube (20) and the axis (17) of the guide tube (14) is 20° to 70°C.

7. Apparatus according to one of Claims 1 to 6, **characterized in that** 1 to 8, preferably 2 to 4, expansion nozzles (10) are provided.

8. Apparatus according to one of Claims 1 to 7, **characterized in that** there is an encircling tube (21) which, together with the guide tube (14), forms a flow passage.

9. Apparatus according to one of Claims 1 to 8, **characterized in that** opposite the expansion nozzle (10) there is at least one diverting body (11) which diverts the carbon dioxide formed during the expansion of the liquid or supercritical carbon dioxide towards or along the inner wall of the hollow section (8).

10. Apparatus according to Claim 9, **characterized in that** the diverting body (11) is designed as a cone or a truncated cone.

11. Apparatus according to one of Claims 9 or 10, **characterized in that** there is a diverting ring (12) which is arranged coaxially with respect to the hollow section (8) and, in combination with the diverting body (11), is responsible for diverting the carbon dioxide which emerges from the expansion nozzle (10) along the inner wall of the hollow section (8).

12. Method for cooling extruded hollow sections (8), in particular tubes, made from plastic, in which liquid or supercritical carbon dioxide is passed into the interior of the hollow section through an extruder head (5) via at least one feed line (4) and at least one expansion nozzle (10) and is expanded, forming gaseous and solid carbon dioxide, and the interior of the hollow plastic section (8) being cooled by the expanded carbon dioxide, **characterized in that** the expanded carbon dioxide is passed through a flow passage which is formed by a guide tube, which is located inside the hollow section and has openings at both axial ends, and the hollow section, the guide tube being arranged in such a way that the carbon dioxide which emerges from the expansion nozzle (10) generates a suction in the direction of the expansion nozzle in the interior of the guide tube, and the solid carbon dioxide which forms during the expansion of the liquid or supercritical carbon dioxide is converted into the gaseous state by gas located in the interior of the hollow section (8).

13. Method according to Claim 12, **characterized in that** the liquid or supercritical carbon dioxide passed through the extruder head (5) is distributed within the extruded hollow section (8) and is then expanded.

14. Method according to Claim 13, **characterized in that** the liquid or supercritical carbon dioxide is distributed over a plurality of nozzles (10) arranged rotationally symmetrically with respect to the extruded hollow section (8) or one annular nozzle arranged coaxially with respect to the hollow section (8).

15. Method according to one of Claims 12 to 14, **characterized in that** the expanded carbon dioxide is guided onto a diverting body (11).

16. Method according to one of Claims 12 to 15, **characterized in that** a swirling flow is imposed on the expanded carbon dioxide.

17. Method according to one of Claims 12 to 16, **characterized in that** the kinetic energy of the carbon dioxide which is brought into thermal contact with the inner wall of the hollow section (8) substantially corresponds to the kinetic energy of the carbon dioxide immediately after the expansion.

18. Method according to one of Claims 12 to 17, **characterized in that** liquid carbon dioxide at ambient temperature is passed through the extruder head (5).

19. Method according to one of Claims 12 to 18, **characterized in that** the hollow section (8) is internally and externally cooled.

## Revendications

1. Dispositif pour le refroidissement de profilés creux extrudés (8), en particulier de tubes en matière plastique avec au moins une conduite d'amenée (4) pour le dioxyde de carbone liquide ou surcritique, qui s'étend par une tête d'extrusion (5) à l'intérieur du profilé creux (8) et qui présente au moins une buse de détente (10), **caractérisé en ce qu'**un tube directeur (14), qui forme avec le profilé creux (8) un conduit d'écoulement pour le dioxyde de carbone détendu et qui présente à ses deux extrémités axiales des ouvertures, est disposé de telle sorte qu'une succion dans la direction de la buse de détente (10) soit produite à l'intérieur du tube directeur (14) par le dioxyde de carbone sortant de la buse de détente (10).

2. Dispositif selon la revendication 1, **caractérisé en ce qu'**il est prévu plusieurs buses (10) disposées avec une symétrie de révolution par rapport au profilé creux extrudé (8) ou une buse annulaire disposée coaxialement au profilé creux (8).

3. Dispositif selon l'une quelconque des revendications 1 ou 2, **caractérisé en ce que** le tube directeur (14) mesure entre 0,5 m et 3 m de long.

4. Dispositif selon l'une quelconque des revendications 1 à 3, **caractérisé en ce que** l'ouverture de sortie de la buse de détente (10) est orientée à l'opposé de la direction d'extrusion.

5. Dispositif selon l'une quelconque des revendications 1 à 4, **caractérisé en ce qu'**il est prévu une ou plusieurs tôles conductrices (13) ou tubes d'injection (20) qui provoquent un écoulement tourbillonnaire du dioxyde de carbone détendu.

6. Dispositif selon la revendication 5, **caractérisé en ce que** l'angle entre le tube d'injection (20) et l'axe (17) du tube directeur (14) est compris entre 20° et 70°.

7. Dispositif selon l'une quelconque des revendications 1 à 6, **caractérisé en ce qu'**il est prévu de 1 à 8, de préférence de 2 à 4 buses de détente (10).

8. Dispositif selon l'une quelconque des revendications 1 à 7, **caractérisé en ce qu'**un tube de gainage (21) est prévu, lequel forme avec le tube directeur (14) un conduit d'écoulement.

9. Dispositif selon l'une quelconque des revendications 1 à 8, **caractérisé en ce qu'**au moins un corps de déviation (11) se trouve en face de la buse de détente (10), lequel provoque une déviation du dioxyde de carbone se produisant lors de la détente du dioxyde de carbone liquide ou surcritique, dans la direction ou le long de la paroi interne du profilé creux (8).

10. Dispositif selon la revendication 9, **caractérisé en ce que** le corps de déviation (11) est réalisé sous forme de cône ou de tronc de cône.

11. Dispositif selon l'une quelconque des revendications 9 ou 10, **caractérisé en ce qu'**il est prévu une bague de déviation (12) disposée coaxialement au profilé creux (8), laquelle provoque, conjointement avec le corps de déviation (11), une déviation du dioxyde de carbone sortant de la buse de détente (10) le long de la paroi interne du profilé creux (8).

12. Procédé de refroidissement de profilés creux extrudés (8), en particulier de tubes en matière plastique, dans lequel du dioxyde de carbone liquide ou surcritique est conduit par une tête d'extrusion (5) par le biais d'au moins une conduite d'amenée (4) et d'au moins une buse de détente (10) à l'intérieur du profilé creux et est détendu, du dioxyde de carbone gazeux et solide se formant, et l'intérieur du profilé creux en plastique (8) étant refroidi par le dioxyde de carbone détendu, **caractérisé en ce que** le dioxyde de carbone détendu est conduit par un conduit d'écoulement qui est formé par un tube directeur se trouvant à l'intérieur du profilé creux, présentant des ouvertures aux deux extrémités axiales, et le profilé creux, le tube directeur étant disposé de telle sorte qu'une succion dans la direction de la buse de détente soit produite à l'intérieur du tube directeur par le dioxyde de carbone sortant de la buse de détente (10) et que le dioxyde de carbone solide se formant lors de la détente du dioxyde de carbone liquide ou surcritique soit transformé dans l'état gazeux par le gaz se trouvant à l'intérieur du profilé creux (8).

13. Procédé selon la revendication 12, **caractérisé en ce que** le dioxyde de carbone liquide ou surcritique conduit par la tête d'extrusion (5) est distribué dans le profilé creux extrudé (8) et s'y détend ensuite.

14. Procédé selon la revendication 13, **caractérisé en ce que** le dioxyde de carbone liquide ou surcritique est réparti sur plusieurs buses (10) disposées avec une symétrie de révolution par rapport au profilé creux extrudé (8) ou une buse annulaire disposée coaxialement au profilé creux (8).

15. Procédé selon l'une quelconque des revendications 12 à 14, **caractérisé en ce que** le dioxyde de carbone détendu est conduit à un corps de déviation (11).

16. Procédé selon l'une quelconque des revendications 12 à 15, **caractérisé en ce que** le dioxyde de carbone détendu est soumis à un écoulement tourbillonnaire.

17. Procédé selon l'une quelconque des revendications 12 à 16, **caractérisé en ce que** l'énergie cinétique du dioxyde de carbone amené en contact thermique avec la paroi interne du profilé creux (8) correspond essentiellement à l'énergie cinétique du dioxyde de carbone directement après la détente.

18. Procédé selon l'une quelconque des revendications 12 à 17, **caractérisé en ce que** du dioxyde de carbone liquide est conduit à la température ambiante à travers la tête d'extrusion (5).

19. Procédé selon l'une quelconque des revendications 12 à 18, **caractérisé en ce que** le profilé creux (8) est refroidi à l'intérieur et à l'extérieur.
